# EUROPEAN PATENT SPECIFICATION

(11) **EP 2 604 890 B1**
(45) Date of publication and mention of the grant of the patent: **14.05.2014**
(21) Application number: 12196857.2
(22) Date of filing: 13.12.2012
(51) Int. Cl.: F16H 48/08, F16H 55/20, F16H 55/24

(54) **Differential device for vehicle**
Differentialvorrichtung für Fahrzeug
Différentiel pour véhicule

(30) Priority: 16.12.2011 JP 2011276486
(43) Date of publication of application: 19.06.2013
(73) Proprietor: TOYOTA JIDOSHA KABUSHIKI KAISHA, Toyota-shi, Aichi-ken, 471-8571 (JP)
(72) Inventor: Ishimaru, Tomoyoshi, Toyota-shi, Aichi 471-8571 (JP)
(74) Representative: TBK

(56) References cited:
- JP-A- 8 049 758
- JP-A- 2011 247 300
- US-A1- 2011 183 803

## Description

### BACKGROUND OF THE INVENTION

### 1. Field of the Invention

The present invention relates to a differential device for a vehicle. More particularly, the present invention relates to a technology for reducing a possibility that a drive shaft provided in the differential device for a vehicle may get loose from a side gear.

### 2. Description of the Related Art

A vehicle differential device disclosed in Japanese Patent Application Publication No. 08-49758 (JP 08-49758 A) includes a differential case, a pair of side gears, a pair of pinion gears, a pair of drive shafts, and a pair of disc springs. The differential case is rotated by a drive force from a driving source. The pair of the side gears is accommodated in the differential case and disposed such that the pair of the side gears is rotatable rotatably about an axis. Each of the pair of the pinion gears meshes with each of the pair of the side gears and rotates together with the differential case. Each of the pair of the drive shafts is fit to a corresponding one of the pair of the side gears unrotatably relative to each other and movable in a direction of an axis of the pair of the side gears. The pair of the disc springs is disposed between the back surface of the side gear and the internal wall surface of the differential case in a preliminarily pressurized state. In the vehicle differential device of JP 08-49758 A, the side gears are pressed toward the pinion gears by an urging force of the pair of the disc springs.

In the above-mentioned vehicle differential device of JP 08-49758 A, because the side gears are pressed toward the pinion gears by the urging force of the pair of the disc springs, a gap between the outer peripheral teeth of the side gear, which meshes with the outer peripheral teeth of the pinion gear, and the outer peripheral teeth of the pinion gear, i.e., backlash is substantially eliminated.

In the vehicle differential device of JP 08-49758 A, as described above, the backlash is substantially eliminated by the urging force of the pair of the disc springs. Thus, when the vehicle differential device is rotated differentially, the side gear is reciprocated by an amount corresponding to a change amount of the backlash in the direction of the axis of the side gear. In a phase when the backlash is relatively large, the side gears are pushed out in a direction of approaching the pinion gears by the urging force of the pair of the disc springs. In a phase when the backlash is relatively small, the side gears are pushed back in a direction of departing from the pinion gears resisting the urging force of the disc springs. In this way, the side gears reciprocate along the axis of the side gears. In the meantime, a torque is transmitted between the side gear and the drive shaft, for instance, because spline teeth formed in the inner peripheral surface of an engagement hole of the side gear are engaged with spline grooves formed in the outer peripheral surface of a shaft end portion of the drive shaft. With the above-described structure, in a case where the snap ring is mounted on the shaft end portion of the drive shaft, the snap ring may reduce a possibility that the drive shaft may get loose from the engagement hole in the side gear. As a result, the drive shaft may reciprocate together with the side gear.

Thus, when the side gear and the drive shaft are reciprocating together, the side gear may collide with the differential case. At this time, the drive shaft which never collides with anything unlike the side gear which collides with the differential case is given inertial force in a direction in which the drive shaft is pulled out of the side gear. When the magnitude of the inertial force is equal to or larger than a sum of a looseness resistance load of the snap ring and resistance force between the spline teeth of the side gear and the spline grooves in the drive shaft, there is a possibility that the drive shaft may get loose from the side gear.

### SUMMARY OF THE INVENTION

It is the obj ect of the present invention to provide a differential device for vehicle, which, when a side gear collides with a differential case, reduces the magnitude of an inertial force of a drive shaft so as to lower a possibility that the drive shaft may get loose from the side gear.

The object of the invention is achieved with a differential device for a vehicle having the features of claim 1. Further advantageous developments of the invention are subject-matter of the dependent claims.

Because, in the differential device for vehicle according to the present invention, the tooth thickness of the first pinion gear and the tooth thickness of the second pinion gear are different from each other, the side gear is tilted relative to a rotation axis of the differential case. A moving amount of the side gear due to meshing between each of the pair of the pinion gears and the side gear is reduced relative to the related art. Consequently, a collision velocity at the time when the side gear collides with the differential case becomes smaller so that the magnitude of the collision force of the side gear with the differential case decreases relative to the related art. Consequently, the magnitude of an inertial force of the drive shaft when the side gear collides with the differential case also decreases relative to the related art. Therefore, a possibility that the drive shaft may get loose from the side gear is reduced.

The differential device may further include a snap ring. The snap ring is mounted to an end portion of one of the drive shafts and is configured to reduce a possibility that this drive shaft gets loose from the corresponding side gear. Furthermore, the snap ring may be configured to, when this drive shaft is moved relative to the corresponding side gear, make contact with spline teeth of the corresponding side gear.

According to still another aspect of the present invention, a meshing phase in which the first pinion gear meshes with the pair of side gears and a meshing phase in which the second pinion gear meshes with the pair of side gears may be equal to each other. Consequently, a reciprocating amount of the side gear decreases relative to the related art.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a diagram describing a configuration of a drive force transmission apparatus having a differential device (differential device for rear wheels) according to an embodiment of the present invention;
FIG. 2 is a cross-sectional view describing the configuration of the differential device of FIG. 1;
FIG. 3 is a cross-sectional view illustrating the shape of an outer peripheral tooth of one of a pair of pinion gears of FIG. 2;
FIG. 4 is a cross-sectional view illustrating the shape of an outer peripheral tooth of the other of the pair of the pinion gears of FIG. 2;
FIG. 5 is a diagram schematically describing a state in which one of the pair of the side gears meshing with the pair of the pinion gears collides with the differential case in the differential device of the related art including the pair of the pinion gears each having outer peripheral teeth of the same thickness;
FIG. 6 is a diagram schematically describing a substantial moving amount of the side gear until the side gear collides with the differential case when the differential device of FIG. 5 rotates differentially;
FIG. 7 is a diagram schematically describing a state in which one of the pair of the side gears meshing with the pair of the pinion gears collides with the differential case in the differential device of FIG. 2; and
FIG. 8 is a diagram schematically describing a substantial moving amount of the side gear until the side gear collides with the differential case when the differential device of FIG. 7 rotates differentially.

### DETAILED DESCRIPTION OF EMBODIMENTS

Hereinafter, an embodiment of the present invention will be described with reference to an embodiment of the present invention. In following embodiments, the accompanying drawings are simplified or modified appropriately to facilitate understanding thereof. Therefore, a dimensional ratio and shape of each part are not always expressed accurately.

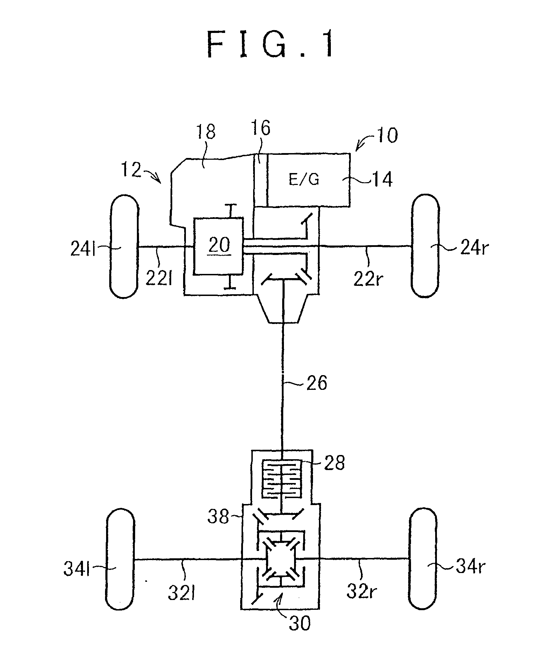

FIG. 1 illustrates a front/rear drive vehicle 10 to which the embodiment of the present invention is applied. The front/rear drive vehicle 10 basically uses front engine, front drive (FF) system. The front/rear drive vehicle 10 is equipped with a drive force transmission device 12. Hereinafter, the configuration of the drive force transmission device 12 will be described with reference to FIG. 1. In the drive force transmission device 12 illustrated in FIG. 1, drive torque generated by an engine (drive source) 14 is transmitted to a pair of front wheels 241, 24r through a torque converter 16, a transmission 18, a front-wheel differential device 20, and a pair of front wheel axles 221, 22r. On the other hand, the drive torque generated by the engine 14 is transmitted to a pair of rear wheels 341, 34r through a propeller shaft 26 which serves as a drive torque transmission shaft, electronic control coupling 28 which serves as a front/rear wheel drive force distribution device, a rear wheel differential device 30 (hereinafter referred to as just differential device 30 or vehicle differential device 30), and a pair of rear-wheel axle 32l, 32r (hereinafter referred to as drive shaft 32l, 32r).

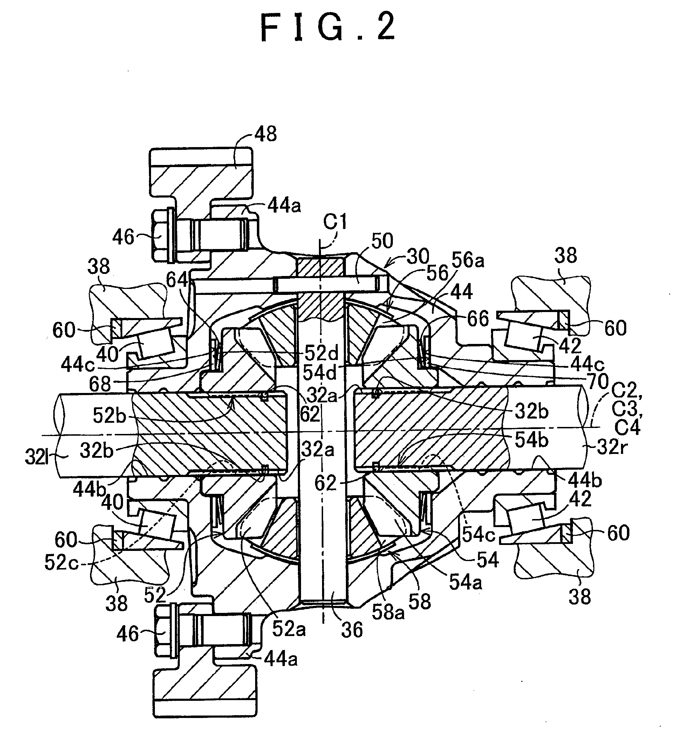

FIG. 2 is a cross-sectional view illustrating a configuration of the differential device 30 of FIG. 1. More specifically, FIG. 2 is a cross-sectional view illustrating a structure of the differential device 30, taken along a plane containing an axis C1 of a pinion shaft 36 and an axis C2 of each of the pair of drive shafts 32l, 32r. As illustrated in FIG. 2, the differential device 30 includes a differential case 44, a ring gear 48, a cylindrical pinion shaft 36, a pair of the side gears 52, 54, and a pair of the pinion gears 56, 58. The differential device 30 is accommodated in a housing 38. In this structure, the housing 38 may be regarded as a component of the differential device 30. Within the housing 38, the differential case 44 is supported rotatably about a first rotation axis C3 through a pair of bearings 40, 42. The first rotation axis C3 may be regarded as substantially the same as a second axis C2 of the pair of the drive shafts 32l, 32r. A ring gear 48 is fixed on a radially outer portion 44a of the differential case 44 with bolts 46. Both end portions of the pinion shaft 36 are supported by the differential case 44. The pinion shaft 36 is fixed to the differential case 44 with a knock pin 50 such that the pinion shaft 36 is perpendicular to the first rotation axis C3 of the differential case 44. The pair of the side gears 52, 54 is disposed such that they are opposed to each other across the pinion shaft 36 and accommodated within the differential case 44. Furthermore, the pair of the side gears 52, 54 is disposed rotatably about an axis C4. The pinion shaft 36 is passed through each of a pair of pinion gears 56, 58. The pair of the pinion gears 56, 58 is rotated with the differential case 44 in a state in which the pinion gears 56, 58 are supported rotatably by the pinion shaft 36. The paired pinion gears 56, 58 have outer peripheral teeth 56a, 58a respectively. Each of the outer peripheral teeth 56a, 58a meshes with each of outer peripheral teeth 52a, 54a of the paired side gears 52, 54. That is, the outer peripheral teeth 56a meshes with the outer peripheral 52a, 54a and the outer peripheral teeth 58a meshes with the outer peripheral 52a, 54a. An annular shim 60 is interposed between each of the pair of bearings 40, 42 and the housing 38. Furthermore, the outer peripheral teeth 52a, 54a of the paired side gears 52, 54 are in an even number and the outer peripheral teeth 56a, 58a of the paired pinion gears 56, 58 are also in an even number.

As illustrated in FIG. 2, the differential case 44 has a pair of through holes 44b formed so as to support the pair of the drive shafts 32l, 32r rotatably. A spline groove 32a is formed in the outer periphery of an end portion of each of drive shafts 32l, 32r in the vicinity of the pinion shaft 36. Spline teeth 52c, 54c are formed on the inner periphery of each of engagement holes 52b, 54b in the paired side gears 52, 54 such that they mesh with the spline groove 32a in each of the drive shafts 32l, 32r.

As illustrated in FIG. 2, the paired drive shafts 32l, 32r are inserted into the through holes 44b making a pair in the differential case 44. The pair of the drive shafts 32l, 32r is fit to each of the engagement holes 52b, 54b in the pair of the side gears 52, 54 such that the spline teeth 52c, 54c mesh with the spline grooves 32a. That is, the pair of the drive shafts 32l, 32r is fit to each of the engagement holes 52b, 54b such that they are incapable of rotating relative to the side gears 52, 54. The pair of the drive shafts 32l, 32r is movable relative to the side gears 52, 54 in the direction of the axis C4. The axis C2 of the drive shafts 32l, 32r is provided on substantially the same axis as the axis C4 of the side gears 52, 54.

As illustrated in FIG. 2, an annular groove 32b is provided in part of the outer periphery of each of the drive shafts 32l, 32r having the spline grooves 32a. A snap ring 62 is fit into the annular groove 32b. Thus, when any one of the drive shafts 32l, 32r attempts to get loose from a corresponding one of the side gears 52, 54, the snap ring 62 fit to the drive shaft 32l, 32r makes contact with a corresponding one of the spline teeth 52c, 54c in the side gears 52, 54. That is, when any one of the paired drive shafts 32l, 32r is moved relative to the paired side gears 52, 54, the snap ring 62 makes contact with the spline teeth 52c of the side gear 52 or the spline teeth 54c of the side gear 54. Thus, the snap ring 62 reduces a possibility that the drive shafts 32l, 32r may get loose from the side gears 52, 54.

As illustrated in FIG. 2, a pair of disc springs 64, 66 is interposed each between a back surface 52d of the side gear 52 and an inside wall surface 44c of the differential case 44, and between a back surface 54d of the side gear 54 and an inside wall surface 44c of the differential case 44 in a pressurized state. With an urging force of the pair of the disc springs 64, 66, the side gears 52, 54 are pressed toward the pinion gears 56, 58 in a direction in which they approach the pinion gears 56, 58. As illustrated in FIG. 2, an annular washer 68, 70 is interposed between each of the disc springs 64, 66 and the inside wall surface 44c of the differential cases 44.

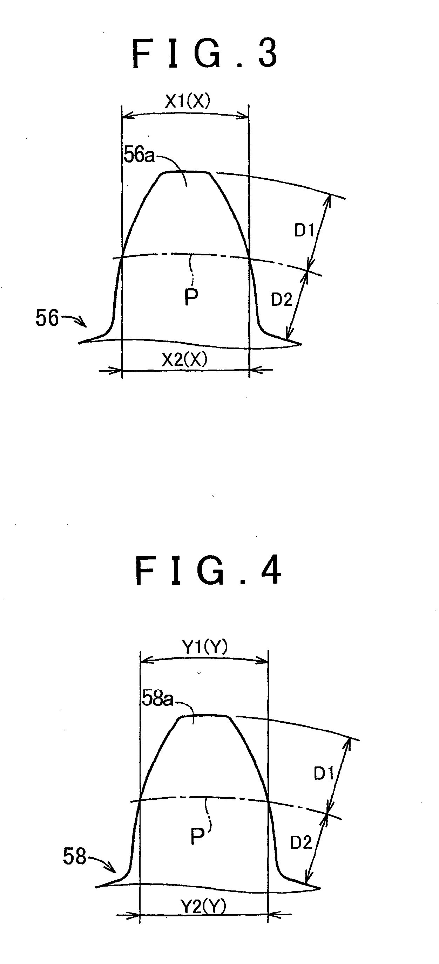

FIG. 3 is a cross-sectional view illustrating the shape of the outer peripheral gear of one of the pair of the pinion gears 56 illustrated in FIG. 2. FIG. 4 is a cross-sectional view illustrating the shape of the outer peripheral gear of the other of the pair of the pinion gears 58 illustrated in FIG. 2. Regarding the pair of the pinion gears 56, 58, a tooth thickness X of the outer peripheral teeth 56a of the one pinion gear 56 (hereinafter referred to as first pinion gear 56 depending on a case) is set with a different value from a tooth thickness Y of the outer peripheral teeth 58a of the other pinion gear 58 (hereinafter referred to as second pinion gear 58 depending on a case). That is, the tooth thickness Y of the outer peripheral teeth 58a of the second pinion gear 58 is set larger than the tooth thickness X of the outer peripheral teeth 56a of the first pinion gear 56. In the meantime, in the present embodiment, the tooth thickness X means any one of circular thickness X1 and chordal thickness X2. The tooth thickness Y means any one of circular thickness Y1 and chordal thickness Y2. That is, the circular thickness Y1 of the outer peripheral teeth 58a of the second pinion gear 58 is set larger than the circular thickness X1 of the outer peripheral teeth 56a of the first pinion gear 56. In addition, the chordal thickness Y2 of the outer peripheral teeth 58a of the second pinion gear 58 is set larger than the chordal thickness X2 of the outer peripheral teeth 56a of the first pinion gear 56.

As illustrated in FIGs. 3, 4, the paired pinion gears 56, 58 have the same pitch circle diameter. In the outer peripheral teeth 56a of the pinion gear 56 and the outer peripheral teeth 58b of the pinion gear 58, their tooth tip height D1, i.e., addendum D1, and tooth root height D2, i.e., dedendum D2, are equal to each other. The pair of the pinion gears 56, 58 has, for example, 10 teeth. Namely, the paired pinion gears 56, 58 have the same shape except that the tooth thicknesses X, Y are different. A circular dot and dash line illustrated in FIGs. 3, 4 indicates part of a pitch circle P of each of the paired pinion gears 56, 58. A meshing phase in which the first pinion gear 56 meshes with the side gears 52, 54 is configured to be equal to a meshing phase in which the second pinion gear 58 meshes with the side gears 52, 54. Speaking more in detail, the outer peripheral teeth 56a of the first pinion gear 56 is meshed with the outer peripheral teeth 52a of the side gear 52 and the outer peripheral teeth 54a of the side gear 54, and the outer peripheral teeth 58a of the second pinion gear 58 is meshed with the outer peripheral teeth 52a of the side gear 52 and the outer peripheral teeth 54a of the side gear 54. That is, in the present embodiment, a meshing phase in which the side gear 52 meshes with the first pinion gear 56 and a meshing phase in which the side gear 52 meshes with the second pinion gear 58 are equal to each other. Furthermore, a meshing phase in which the side gear 54 meshes with the first pinion gear 56 and a meshing phase in which the side gear 54 meshes with the second pinion gear 58 are equal to each other.

In the differential device 30 having the above-described structure, when the differential device 30 is rotated differentially during traveling of a vehicle, the differential case 44 is rotated by a drive torque input from the engine 14 via the ring gear 48, and a pair of rear wheels 341, 34r is supplied with a difference of rotation following resistances on the rear wheels 341, 34r from the ground surface. Furthermore, the differential device 30 has a differential restriction function, which restricts a differential between the paired rear wheels 341 and 34r by generating a friction force between the paired side gears 52, 54 and the differential case 44 with an urging force of the pair of the disc springs 64, 66.

In the differential device 30, the side gears 52, 54 are urged in a direction of approaching the pinion gears 56, 58 due to an urging force of the paired disc springs 64, 66. Consequently, a gap, i.e., a backlash between the outer peripheral teeth 52a, 54a of the side gears 52, 54 and the outer peripheral teeth 56a, 58a of the pinion gears 56, 58 is substantially eliminated. Thus, when the differential device 30 is rotated differentially, the side gears 52, 54 are reciprocated in the direction of the axis C4 of the side gears 52, 54 by an amount corresponding to a change amount of the backlash. Furthermore, when the differential device 30 is rotated differentially, the drive shafts 32l, 32r and the side gears 52, 54 are both reciprocated together via the snap rings 62 mounted on the drive shafts 32l, 32r. Then, when the side gears 52, 54 and the drive shafts 32l, 32r are reciprocated together, the paired side gears 52 and/or 54 can collide with the differential case 44.

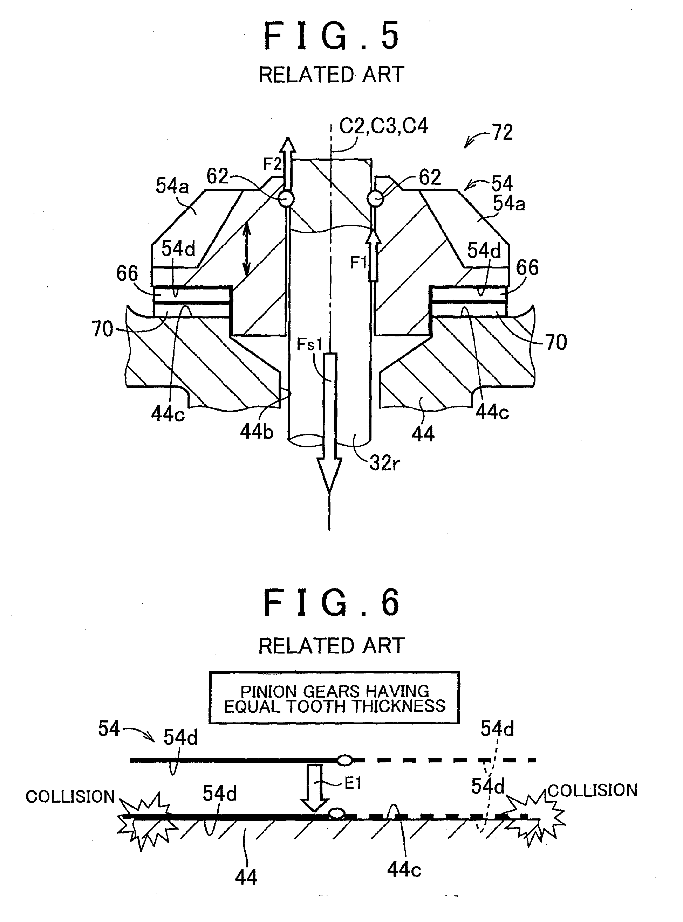

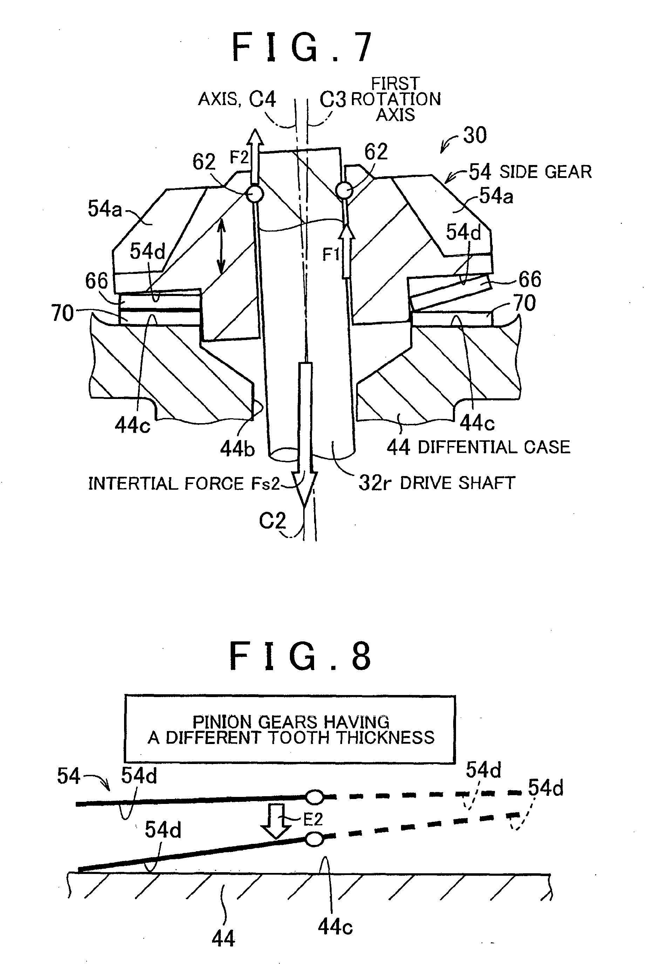

Assuming that the side gear 54 collides with the differential case 44 in the differential device 72 of the related art and the differential device 30 to which the present invention is applied, a relation of the magnitude between inertial force Fs1 and inertial force Fs2 applied to the drive shaft 32r will be described with reference to FIGs. 5 to 8. In FIGs. 5 and 7 illustrating a state in which the side gear 54 collides with the differential case 44, an arrow F1 indicates a resistance force acting between the spline teeth 54c of the side gear 54 and the spline grooves 32a in the drive shaft 32r. An arrow F2 indicates a looseness resistance load of the snap ring 62.

FIG. 5 is a diagram illustrating a state in which the side gear 54 collides with the differential case 44 in the differential device 72 of the related art. FIG. 6 is a diagram schematically illustrating a substantial moving amount E1 of the differential case 44 in the direction of the first rotation axis C3 until the side gear 54 collides with the differential case 44 upon a differential rotation of the differential device 72 of the related art. Also, FIG. 6 is a diagram represented by simplifying the side gear 54 and the differential case 44 in FIG. 5. The differential device 72 of the related art differs from the differential device 30 in that in the differential device 72, the pair of the second pinion gears 58 having the same tooth thickness Y is meshed with the pair of the side gears 52, 54 and that the pair of the second pinion gears 58 having the same tooth thickness Y is used.

As illustrated in FIG. 6, when the differential device 72 of the related art is rotating differentially, the change amounts of backlash on both sides of the side gears 54 which mesh with the pair of the second pinion gears 58 having the same tooth thickness Y are equal. Thus, the side gears 54 are reciprocated such that its axis C4 is parallel to the first rotation axis C3 of the differential case 44. Consequently, as illustrated in FIG. 5, an entire surface of the back surface 54d of the side gear 54 collides with the inside wall surface 44c of the differential case 44 via the disc spring 66 and the washer 70. Thus, as illustrated in FIG. 6, a difference between the minimum backlash of the side gear 54 which meshes with the second pinion gear 58 and the maximum backlash of the side gear 54 which meshes with the second pinion gear 58, i.e., a change mount of the backlash is a moving amount E1 of the side gear 54.

FIG. 7 is a diagram illustrating a state in which the side gears 54 which mesh with the paired pinion gears 56, 58 each having a different tooth thickness X, Y respectively, collide with the differential case 44. FIG. 8 is a diagram illustrating a substantial moving amount E2 of the differential case 44 in the direction of the first rotation axis C3 until the side gear 54 collides with the differential case 44 when the differential device 30 is rotating differentially. Also, FIG. 8 is a diagram represented by simplifying the side gear 54 and the differential case 44 in FIG. 7. In FIG. 8 in which the back surface 54d of the side gear 54 is expressed with a straight line, a solid line indicates a second pinion gear 58 side of the side gear 54. A broken line indicates a first pinion gear 56 side of the side gear 54.

As illustrated in FIG. 8, when the differential device 30 is rotating differentially, the side gear 54 meshes with the paired pinion gears 56, 58 each having a different tooth thickness X, Y respectively. Consequently, a difference occurs between a change amount of backlash on the first pinion gear 56 side of the side gear 54 and a change amount of backlash on the second pinion gear 58 side of the side gear 54. Consequently, as illustrated in FIG. 7, with the axis C4 of the side gear inclined relative to the first rotation axis C3 of the differential case 44, the back surface 54d on the second pinion gear 58 side of the side gear 54 collides with the inside wall surface 44c of the differential case 44 via the disc spring 66 and the washer 70.

Thus, when the differential device 30 and the differential device 72 of the related art are rotating differentially, the moving amount E2 of the side gear 54 in the differential device 30 is smaller than the moving amount E1 of the side gear 54 in the differential device 72 of the related art. Thus, in a case that the numbers of the differential rotations of the differential device 30 and the differential device 72 of the related art are equal to each other when the differential device 30 and the differential device 72 are rotating differentially, a moving velocity of the side gear 54 in the differential device 30 in the direction of the first rotation axis C3 of the differential case 44 is smaller than the moving velocity of the side gear 54 in the differential device 72 of the related art. Consequently, the magnitude of a collision force of the side gear 54 with the differential case 44 is decreased relative to the magnitude of a collision force of the side gear 54 in the differential device 72 of the related art with the differential case 44. Thus, when the side gear 54 collides with the differential case 44, an inertial force Fs2 acting on the drive shaft 32r which moves together with the side gear 54 is smaller than an inertial force Fs1 of the drive shaft 32r in the differential device 72 of the related art.

Like the side gear 54, the moving amount of the side gear 52 in the differential device 30 is smaller than the moving amount of the side gear 52 in the differential device 72 of the related art. Thus, the inertial force of the drive shaft 32l in the differential device 30 becomes smaller than the inertial force of the drive shaft 32l in the differential device 72 of the related art.

In the differential device 30 of the present embodiment, the tooth thickness X of the outer peripheral teeth 56a of the first pinion gear 56 is set with a different value from the tooth thickness Y of the outer peripheral teeth 58a of the second pinion gear 58. Thus, the axis C4 of the side gear 54 is tilted relative to the first rotation axis C3 of the differential case. Consequently, the moving amount E2 of the side gear 54 due to meshing between the paired pinion gears 56, 58 and the side gear 54 is smaller than the moving amount E1 of the side gear 54 in the differential device 72 of the related art. As described above, the differential device 72 of the related art has a pair of the second pinion gears 58 having a same tooth thickness Y. Therefore, in the differential device 30 of the present embodiment, a collision velocity of the side gear 54 when it collides with the differential case 44 becomes smaller than the related art, and the magnitude of the collision force of the side gear 54 with the differential case 44 decreases relative to the related art. As a result, the inertial force Fs2 of the drive shaft 32r at a time when the side gear 54 collides with the differential case 44 decreases relative to the inertial force Fs1 of the drive shaft 32r of the related art. Consequently, a possibility that the drive shaft 32l in the differential device 30 may get loose from the side gear 52 and a possibility that the drive shaft 32r may get loose from the side gear 54 are reduced.

Furthermore, in the differential device 30 of the present embodiment, meshing phases in which the paired pinion gears 56, 58 mesh with the side gear 54 are equal to each other. Thus, the moving amount E2 of the side gear 54 is preferably reduced. In addition, only by changing the tooth thickness of any one of the pinion gears 56, 58 of the related art, the present invention can be applied without changing the specification of the side gear 54.

Although the embodiment of the present invention has been described above with reference to the drawings, the present invention may be applied to other embodiments.

The differential device 30 of the present embodiment is applied to a vehicle equipped with the engine 14 and the differential case 44 is rotated with a drive force from the engine 14. However, the differential device 30 may be applied to, for example, an electric vehicle or series hybrid vehicle (HV). The differential case 44 may be rotated with a drive force from a drive source of the electric vehicle or the series HV.

Although in the differential device 30 of the present embodiment, the number of the outer peripheral teeth 56a, 58a of the paired pinion gears 56, 58 is even, the number of the teeth thereof may be odd. Furthermore, although the tooth number of the outer peripheral teeth 52a, 54a of the paired side gears 52, 54 is even, the tooth number may be odd.

In the differential device 30 of the present embodiment, although the differential device 30 is employed as a differential device for rear wheels, it may be employed as a differential device for front wheels.

In the present embodiment, the snap ring 62 is used as a configuration for reducing a possibility that the drive shafts 32l, 32r may get loose from the side gears 52, 54. However, in place of the snap ring 62, a variety of configurations may be applied to reduce the possibility that the drive shaft may get loose from the side gear. That is, any member may be used as long as it serves as a stopper for restricting a relative movement between the drive shaft 32l or 32r and the side gear 52 or 54 when the drive shaft 32l or 32r attempts to get loose from the side gear 52 or 54.

Although other embodiments will not be described individually, the present invention may be carried out in a variety of embodiments which undergo alteration or modification based on knowledge of those skilled in art.

A differential device (30) for vehicle includes a differential case (44), a pair of side gear (52, 54), a pair of pinion gears (56, 58), a pair of drive shafts (32l, 32r) and a pair of disc springs (64, 66). The differential device (30) for vehicle is **characterized in that:** the pair of the pinion gears (56, 58) is constituted by a first pinion gear (56) and a second pinion gear (58); and a tooth thickness of the first pinion gear (56) and a tooth thickness of the second pinion gear (58) are different from each other.

## Claims

1. A differential device (30) for vehicle comprising:
a differential case (44) that is rotatable with a drive force from a drive source (14);
a pair of side gears (52, 54) that is accommodated in the differential case (44) and disposed rotatably about an axis;
a pair of pinion gears (56, 58) that is rotated together with the differential case (44), each of said pinion gears (56, 58) meshing with each of said side gears (52, 54);
a pair of drive shafts (321, 32r), each of said drive shafts (321, 32r) being fitted to a corresponding one of said side gears (52, 54) unrotatably relative to each other and movable in the direction of the axis of the pair of side gears (52, 54); and
a pair of disc springs (64, 66), each of said disc springs (64, 66) being disposed between a back surface (52d, 54d) of each of said side gears (52, 54) and an inside wall surface (44c) of the differential case (44) in a preliminarily pressurized state;
wherein the pair of pinion gears (56, 58) is constituted by a first pinion gear (56) and a second pinion gear (58);
the differential device (30) for vehicle being **characterized in that**:
a tooth thickness of the first pinion gear (56) and a tooth thickness of the second pinion gear (58) are different from each other.

2. The differential device (30) for vehicle according to claim 1 further comprising a snap ring (62) that is mounted to an end portion of one of the drive shafts (32l, 32r) and is configured to reduce a possibility that said drive shaft (32l, 32r) gets loose from the corresponding side gear (52, 54).

3. The differential device (30) for vehicle according to claim 2, wherein,
when said drive shaft (32l, 32r) is moved relative to said corresponding
side gear (52, 54), the snap ring (62) is configured to make contact with spline teeth (52c, 54c) of said corresponding side gear (52, 54).

4. The differential device (30) for vehicle according to any one of claims 1 to 3, wherein a meshing phase in which the first pinion gear (56) meshes with the pair of side gears (52, 54) and a meshing phase in which the second pinion gear (58) meshes with the pair of side gears (52, 54) are equal to each other.

## Patentansprüche

1. Differenzialvorrichtung (30) für ein Fahrzeug, die Folgendes aufweist:
ein Differenzialgehäuse (44), das mit einer Antriebskraft von einer Antriebsquelle (14) drehbar ist;
ein Paar Seitenräder (52, 54), das in dem Differenzialgehäuse (44) aufgenommen ist und um eine Achse drehbar angeordnet ist;
ein Paar Ritzel (56, 58), das zusammen mit dem Differenzialgehäuse (44) gedreht wird, wobei jedes der Ritzel (56, 58) mit jedem der Seitenräder (52, 54) eingreift;
ein Paar Antriebswellen (32l, 32r), wobei jede der Antriebswellen (32l, 32r) an einem entsprechenden der Seitenräder (52, 54) nicht drehbar relativ zueinander befestigt ist und in der Richtung der Achse des Paars der Seitenräder (52, 54) bewegbar ist; und
ein Paar Tellerfedern (64, 66), wobei jede der Tellerfedern (65, 66) zwischen einer Rückfläche (52d, 54d) von jedem der Seitenräder (52, 54) und einer innenseitigen Wandfläche (44c) des Differenzialgehäuses (44) in einem vorbereiteten mit Druck beaufschlagten Zustand ist;
wobei das Paar Ritzel (56, 58) durch ein erstes Ritzel (56) und ein zweites Ritzel (58) gebildet ist;
wobei die Differenzialvorrichtung (30) für ein Fahrzeug **dadurch gekennzeichnet ist, dass**:
eine Zahndicke des ersten Ritzels (56) und eine Zahndicke des zweiten Ritzels (58) sich voneinander unterscheiden.

2. Differenzialvorrichtung (30) für ein Fahrzeug nach Anspruch 1, die des Weiteren einen Sprengring (62) aufweist, der an einem Endabschnitt von einer der Antriebswellen (32l, 32r) montiert ist und gestaltet ist, um eine Wahrscheinlichkeit zu verringern, dass sich die Antriebswelle (32l, 32r) von dem entsprechenden Seitenrad (52, 54) löst.

3. Differenzialvorrichtung (30) für ein Fahrzeug nach Anspruch 2, wobei, wenn die Antriebswelle (32l, 32r) relativ zu dem entsprechenden Seitenrad (52, 54) bewegt wird, der Sprengring (62) gestaltet ist, um eine Keilverzahnung (52c, 54c) des entsprechenden Seitenrads (52, 54) zu berühren.

4. Differenzialvorrichtung (30) für ein Fahrzeug nach einem der Ansprüche 1 bis 3, wobei eine Eingriffsphase, in der das erste Ritzel (56) mit dem Paar Seitenräder (52, 54) eingreift, und eine Eingriffsphase, in der das zweite Ritzel (58) mit dem Paar Seitenräder (52, 54) eingreift, gleich zueinander sind.

## Revendications

1. Dispositif de différentiel (30) pour véhicule comprenant :
un carter de différentiel (44) qui peut être mis en rotation avec une force d'entraînement venant d'une source d'entraînement (14) ;
une paire d'engrenages latéraux (52, 54) qui est logée dans le carter de différentiel (44) et disposée à rotation autour d'un axe ;
une paire de pignons (56, 58) qui tournent conjointement avec le carter de différentiel (44), chacun desdits pignons (56, 58) coopérant avec chacun desdits engrenages latéraux (52, 54) ;
une paire d'arbres d'entraînement (321, 32r), chacun desdits arbres d'entraînement (321, 32r) étant ajusté sur l'un correspondant desdits engrenages latéraux (52, 54) de manière non rotative relativement à l'autre et mobile dans la direction de l'axe de la paire d'engrenages latéraux (52, 54) ; et
une paire de rondelles élastiques (64, 66), chacune des rondelles élastiques (64, 66) étant disposée entre une surface arrière (52d, 54d) de chacun desdits engrenages latéraux (52, 54) et une surface de paroi intérieure (44c) du carter de différentiel (44) dans un état comprimé préliminaire ;
dans lequel la paire de pignons (56, 58) est constituée par un premier pignon (56) et un second pignon (58) ;
le dispositif de différentiel (30) pour véhicule étant **caractérisé en ce que** :
une épaisseur de dent du premier pignon (56) et une épaisseur de dent du second pignon (58) sont différentes l'une de l'autre.

2. Dispositif de différentiel (30) pour véhicule selon la revendication 1 comprenant en outre un circlip (62) qui est monté sur une partie d'extrémité de l'un des arbres d'entraînement (321, 32r) et est configuré pour réduire une possibilité que ledit arbre d'entraînement (321, 32r) soit relâché par rapport à l'engrenage latéral (52, 54) correspondant.

3. Dispositif de différentiel (30) pour véhicule selon la revendication 2, dans lequel,
quand ledit arbre d'entraînement (321, 32r) est déplacé relativement au dit engrenage latéral (52, 54) correspondant, le circlip (62) est configuré pour entrer en contact avec des dents de cannelure (52c, 54c) dudit engrenage latéral (52, 54) correspondant.

4. Dispositif de différentiel (30) pour véhicule selon l'une quelconque des revendications 1 à 3, dans lequel une phase de coopération dans laquelle le premier pignon (56) coopère avec la paire d'engrenages latéraux (52, 54) et une phase de coopération dans laquelle le second pignon (58) coopère avec la paire d'engrenages latéraux (52, 54) sont égales.
